# FASCICULE DE BREVET EUROPEEN

(11) **EP 1 943 112 B1**
(45) Date de publication et mention de la délivrance du brevet: **09.09.2009**
(21) Numéro de dépôt: 06806776.8
(22) Date de dépôt: 18.09.2006
(51) Int. Cl.: B60C 17/04

(54) **DISQUE D'INTERFACE POUR ROUE DE VEHICULE.**
INTERFACESCHEIBE FÜR EIN FAHRZEUGRAD
INTERFACE DISC FOR A VEHICLE WHEEL

(30) Priorité: 07.10.2005 FR 0510309
(43) Date de publication de la demande: 16.07.2008
(73) Titulaire: Société de Technologie Michelin, 63000 Clermont-Ferrand (FR); Michelin Recherche et Technique S.A., 1763 Granges-Paccot (CH)
(72) Inventeur: AUXERRE, Pascal, 63130 Royat (FR)
(74) Mandataire: Dequire, Philippe Jean-Marie Denis
(86) Numéro de dépôt international: PCT/EP2006/066458
(87) Numéro de publication internationale: WO 2007/042374

(56) Documents cités:
- FR-A- 2 445 774
- PATENT ABSTRACTS OF JAPAN vol. 017, no. 343 (M-1436), 29 juin 1993 (1993-06-29) & JP 05 042804 A (SUMITOMO WIRING SYST LTD), 23 février 1993 (1993-02-23)
- PATENT ABSTRACTS OF JAPAN vol. 009, no. 223 (M-411), 10 septembre 1985 (1985-09-10) & JP 60 080907 A (SHIYUUJI ENDOU), 8 mai 1985 (1985-05-08)

## Description

L'invention concerne les pneumatiques et en particulier un dispositif limitant les effets dus à une perte de pression rapide d'un pneumatique.

Les pneumatiques de tous types sont sujets aux diverses agressions que peuvent présenter les routes : défauts de revêtement, présence de corps étrangers pouvant parfois s'avérer très agressifs, obstacles en tous genres, etc. Dans un tel contexte, les risques de perforation des pneumatiques en cours d'utilisation existent en tout lieu et dans les circonstances les plus variées. De telles perforation peuvent entraîner des pertes de pression très rapides.

Pour les pneumatiques de type tourisme, ce problème a fait l'objet de nombreux développements technologiques. Par exemple, des ensembles pneumatique/jante ont été développés (voir notamment les brevets US 6092575, US6418992, US 5634993, US 5785781) qui, en cas de perte de pression, permettent à l'usager de poursuivre sa route sur au moins une distance minimale. En général, des dispositifs avertisseurs de dégonflement sont prévus dans le véhicule équipé de tels ensembles afin de prévenir l'usager d'une perte de pression. On connaît aussi des pneumatiques dont la structure, notamment au niveau des flancs, est renforcée, pour leur permettre, même à l'état dégonflé, de supporter une charge sensiblement équivalente à leur charge nominale sans modification sensible des performances au moins pendant une distance d'utilisation minimale.

F2-A-2 445 774 montre un dispositif utilisé pour améliorer la portance et adhérence des pneumatiques correspondant au préambule de la revendication 1.

Toutefois, tous les véhicules, et notamment les véhicules de type poids lourds, ne sont pas aujourd'hui équipés de tels ensembles ou pneumatiques. Pour faire en sorte que les effets d'une perforation sur des pneumatiques de type usuel soient le moins instantanés possible, il a été proposé dans l'état de la technique des solutions consistant par exemple à disposer à l'intérieur de chaque pneumatique de type usuel un autre pneumatique de dimensions adaptées de sorte que, lors d'une perforation du pneumatique ou d'une perte de pression de ce dernier, le pneumatique interne serve de support au pneumatique externe. Il n'en demeure pas moins que la différence de comportement entre l'état du pneumatique initial gonflé et l'état du pneumatique supporté par un pneumatique interne est très importante (ce n'est plus le pneumatique externe qui fonctionne mais le pneumatique interne) ce qui peut occasionner des difficultés d'adaptation de la part du conducteur du véhicule dans cette situation.

On connaît aussi des dispositifs placés dans le pneumatique qui, tout en n'étant pas gonflés en usage normal, peuvent réduire la perte de pression dans le pneumatique lors d'une perforation de ce dernier. Le document publié sous la référence US2002/0121325 décrit un tel dispositif. Ce dispositif comprend un tube toroïdal de dimensions réduites par rapport au volume de la cavité du pneumatique, afin d'éviter le plus possible les interactions entre le pneumatique et le tube en fonctionnement normal (c'est-à-dire pneumatique gonflé), ce tube étant pourvu d'au moins une ouverture pour mettre en communication la cavité délimitée par le tube avec la cavité du pneumatique dans lequel le tube est placé. Lors d'une perforation du pneumatique, la pression de gonflage dans la cavité délimitée par le pneumatique et le tube toroïdal s'échappe tandis que ledit tube ne comportant qu'une petite ouverture conserve une pression quasi inchangée au moins pendant un temps suffisant pour que le conducteur puisse rallier un poste de réparation. L'action de la pression dans le tube, de dimensions appropriées à celles du pneumatique à l'intérieur duquel il est disposé, vient le plaquer contre les bourrelets du pneumatique, ce qui a pour effet de tenir les bourrelets contre les rebords de jante et de limiter la perte de pression dans le tube.

Toutefois, s'il est aisé d'avoir un placage du tube contre les bourrelets dans le cas d'un pneumatique de rapport de forme (hauteur de section /largeur de section) au moins égal à 0.80, ce n'est plus le cas avec un pneumatique dit "taille basse" ("low ratio" en anglais), c'est-à-dire inférieur à 0.80, puisque le tube en se gonflant adopte nécessairement une forme d'équilibre purement pneumatique qui tend à éloigner ledit tube des parois du pneumatique qu'il est censé repousser pour les bloquer contre la jante.

Enfin, ce tube ne permet pas d'empêcher un changement de comportement du pneumatique puisqu'il existe un délai plus ou moins long entre le début de la perte de pression de la cavité formée entre le pneumatique et le tube et le moment où le tube est lui même sollicité comme support. Enfin lorsque le pneumatique est supporté par le tube interne gonflé, la géométrie du pneumatique est assez sensiblement modifiée par rapport à celle que le même pneumatique adopte lorsqu'il est gonflé et non perforé.

Un objectif de la présente invention est de réduire les effets d'une perforation pour les pneumatiques de type usuel.

Pour ce faire, la présente invention propose un disque d'interface pour roue de véhicule, comportant :
- au moins un élément de fixation, adapté pour permettre la fixation du disque à une roue (de préférence au niveau de la portion centrale de ladite roue) ;
- une pluralité de bras sensiblement radiaux reliés aux éléments de fixation et s'étendant radialement extérieurement depuis l'élément de fixation ;
- une surface d'absorption d'énergie, coopérant avec lesdits bras et destiné à fermer l'espace défini entre les bras radiaux ;
- eau moins un élément de renfort circonférentiel, de forme sensiblement annulaire et coopérant avec l'ensemble des bras, et dont le module est sensiblement plus élevé que celui de la surface d'absorption d'énergie.

Grâce à la présence d'un tel dispositif, les conséquences sur l'environnement immédiat liées à une perte brutale de pression d'un pneumatique peuvent être atténuées. Par exemple, d'éventuelles particules susceptibles d'être projetées lors d'une perte de pression peuvent être stoppées, ou ralenties. Le dispositif empêche les flux d'air provoqués par la chute de pression de se diriger librement et sans contrainte dans le voisinage du véhicule. En outre, les éléments d'absorption permettent de capter une part déterminante de l'énergie émise par les dits flux d'air. Ainsi, grâce aux moyens proposés par l'invention, on obtient un dispositif placé à l'extérieur d'un pneumatique qui permet une atténuation, dans l'environnement ou voisinage dudit pneumatique, des effets engendrés par une perte de pression de gonflage d'un pneumatique ayant subi une perforation, et notamment lorsque cette perte de pression est très rapide. Les bras radiaux, sensiblement rigides, confèrent un bon maintient à l'ensemble des éléments et procurent une bonne résistance structurelle aux efforts. La surface d'absorption d'énergie est souple et/ou plus facilement déformable que les bras radiaux : lors d'un effort important, cette surface se déforme, absorbant ainsi une importante quantité d'énergie.

Selon un mode de réalisation avantageux, la surface d'absorption d'énergie est un écran. Ledit écran est de préférence sensiblement plein : par exemple, il remplit l'essentiel de la surface entre les bras.

Selon un mode de réalisation avantageux, le disque d'interface comporte un élément de renfort circonférentiel interne, coopérant avec lesdits bras et disposé de façon à se trouver au voisinage du crochet de jante lorsque le disque est en position montée sur une roue.

Selon un autre mode de réalisation avantageux, le disque d'interface comporte un élément de renfort circonférentiel externe, coopérant avec lesdits bras et disposé de façon à se trouver dans la zone radialement externe dudit disque.

Toujours selon un autre mode de réalisation avantageux, les éléments de renfort circonférentiels ont une forme sensiblement annulaire et sont conformés dans un matériau sensiblement rigide (par exemple un matériau métallique tel que de l'acier), de sorte que les éléments de renfort circonférentiels soient en tant que tel plus rigides que la surface d'absorption d'énergie : ils contribuent à rigidifier cette dernière.

La surface d'absorption d'énergie est de préférence constituée d'au moins un matériau adapté pour supporter un taux minimum de déformation (comme par exemple un taux d'au moins 1,5 %) sans subir de destruction (comme par exemple un matériau métallique, tel que de l'acier, un tissu tel que l'aramide, ou encore à base de polyuréthane).

Selon un autre mode de réalisation avantageux, les éléments de fixation sont adaptés pour une fixation du disque au niveau des écrous de fixation de la roue.

Selon un mode de réalisation avantageux, le disque d'interface comporte par ailleurs une pluralité d'éléments absorbeurs d'énergie répartis circonférentiellement de façon équidistante (par exemple des tirants ou tiges élastiques, des ressorts, etc). Ces éléments absorbeurs d'énergie sont avantageusement réglables de façon à pouvoir ajuster leur rigidité.

D'autres caractéristiques et avantages de l'invention ressortent de la description faite ci-après en référence aux dessins annexés qui montrent, à titre d'exemples non limitatifs, des formes de réalisation de l'objet de l'invention, et dans lesquels :

les figures 1a et 1b montrent un dispositif selon l'invention et présentent de façon schématique les éléments de fixation sur une roue et les éléments d'absorption : à la figure 1a, les éléments d'absorption sont en position de repos, tandis qu'à la figure 1b, ils sont en position déployée ;

les figures 2a, 2b, 2c et 2d illustrent une autre catégorie d'exemples de réalisation d'un dispositif selon l'invention monté sur une roue de véhicule ;

les figures 3 et 4 illustrent d'autres exemples de réalisation de tels dispositifs.

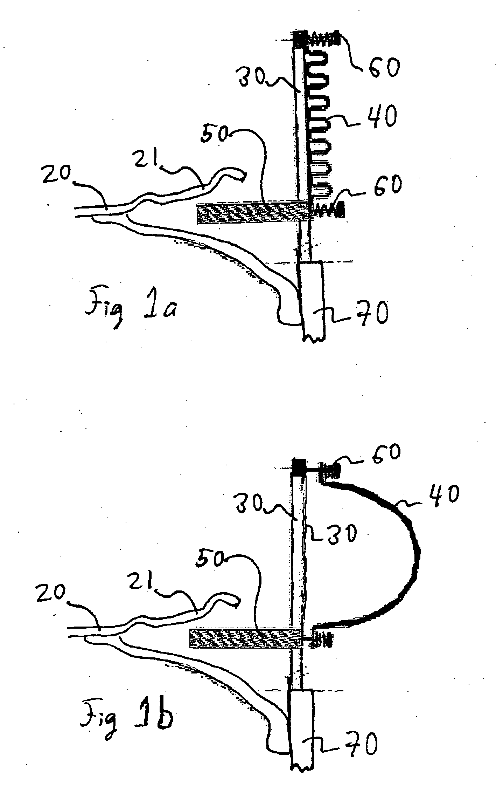

Les figures 1a et 1b présentent, de façon schématique, un disque d'interface 10 selon l'invention. Au moins un élément de fixation 70, sensiblement central, permet d'adapter ou de fixer le disque à une roue 20 de véhicule, par exemple à l'aide des écrous de fixation de la roue. Cet élément peut être constitué d'un disque, ou de tout autre élément de forme appropriée. Des bras radiaux 30, disposés de façon à s'étendre radialement extérieurement au-delà de l'élément central 70, permettent d'une part de définir une vaste surface, et d'autre part de renforcer localement. Ils sont de préférence disposés à équidistance l'un de l'autre et forment une structure de base, plutôt rigide, sur laquelle une surface déformable est disposée. Les bras constitués par exemple de métal sont avantageusement profilés de façon à optimiser la rigidité en fonction du poids, comme par exemple à l'aide de profils en I ou en T. Les bras sont avantageusement dimensionnés de façon à s'étendre au-delà du crochet de jante de la roue correspondante, par exemple pour se terminer un peu avant la bande de roulement du pneumatique monté sur cette roue, de façon à ne pas interférer avec le roulage, tout au moins à pression normale ou quasi-normale.

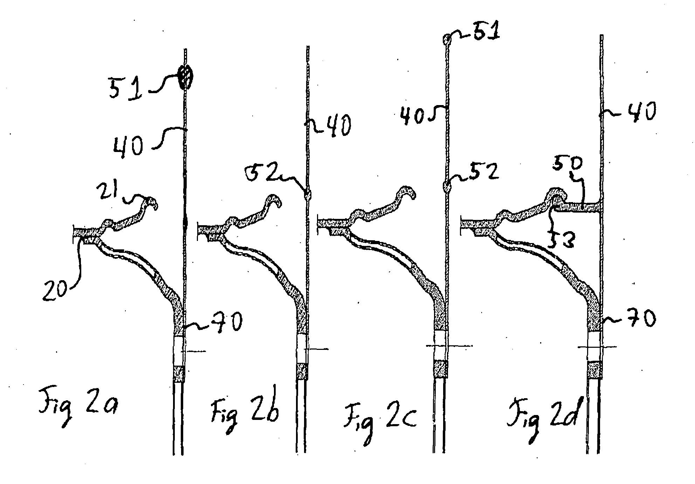

Pour absorber l'énergie susceptible de vouloir s'échapper entre les bras 30, une surface d'absorption d'énergie 40 est constituée d'un ou plusieurs éléments disposés de façon à garnir l'espace défini par les bras. La surface 40 est avantageusement conçue avec un contour externe sensiblement annulaire, avec un rayon adapté en fonction de celui des bras. Par exemple, selon diverses variantes de réalisation, le rayon de cette surface est légèrement plus petit ou plus grand que celui des bras. A la figure 1a, on montre le disque d'interface 10 avec la surface 40 en position de repos. La surface 40 est alors sensiblement plane et occupe un volume sensiblement réduit. A la figure 2b, la surface 40 est en position déployée. Cette position est obtenue par exemple lors d'une libération d'énergie telle que lors d'une perte de pression rapide. La surface 40 est suffisamment souple pour se déformer sous l'effet de cette énergie. La déformation permet d'absorber une part importante de cette énergie. Les bras radiaux 30 sont conçus de façon à être suffisamment rigides pour ne subir qu'une déformation mineure par rapport à celle de la surface 40, tel que montré schématiquement à la figure 1b, où on visualise bien que les bras 30 conservent sensiblement leur orientation radiale, tandis que la surface 40 est complètement déformée. Cette déformation peut être élastique ou non, selon le type de système souhaité. Le nombre et la position angulaire des bras 30 peut varier selon les modes de réalisation. On les prévoit avantageusement de façon à procurer un disque d'interface pour lequel l'équilibrage dynamique soit le plus stable possible.

Le disque 10 comporte avantageusement un ou de préférence plusieurs éléments absorbeurs d'énergie 60 tels que des tirants, des tiges élastiques, des ressorts, etc. Les figures 1a et 1b permettent de voir l'effet de tels éléments absorbeurs. Lors d'une impulsion ou émission énergique, les absorbeurs, initialement au repos, sont sollicités et permettent, en complément de la surface 40, d'absorber une autre portion de l'énergie émise. Dans l'exemple schématique illustré, les éléments absorbeurs 60 sont disposés entre les bras radiaux 30 et la surface 40, et sont sollicité lors du déploiement de cette dernière.

Un ou plusieurs éléments de renforts circonférentiels 50 peuvent être adjoints aux bras radiaux, de façon à augmenter la rigidité de l'ensemble. Dans l'exemple schématique illustré aux figures 1a et 1b, on utilise un anneau plat, fixé aux bras radiaux 30 et s'étendant axialement intérieurement vers la crochet de jante 21. La largeur ou épaisseur de l'élément 50 ainsi que son orientation sensiblement perpendiculaire à la surface d'absorption d'énergie 40, lui confèrent une rigidité qui s'ajoute à celle générée par les bras 30. Les éléments contribuant à la rigidité 30 et 50 sont avantageusement prévus de façon à ce que le disque 10 puisse absorber un maximum d'énergie dans les cas pour lesquels la probabilité de survenir est la plus élevée.

Les figures 2a à 2d illustrent des exemples de réalisation d'un disque d'interface selon l'invention. L'élément de fixation central 70 est prévu pour une fixation à l'aide des écrous de fixation de la roue. La surface d'absorption d'énergie 40 est prévue directement dans le prolongement de l'élément 70. Dans l'exemple de la figure 2a, un élément de renfort circonférentiel extérieur 51 est prévu dans la zone externe de la surface 40. Dans celui de la figure 2b, l'élément de renfort circonférentiel 52 est disposé radialement intérieurement, près de la région du crochet de jante. Dans l'exemple de la figure 2c, deux éléments de renfort sont prévus, un radialement intérieurement 52, l'autre radialement extérieurement 51. Dans ces exemples, l'élément de renfort circonférentiel prend la forme d'un renflement annulaire, s'étendant entre les bras radiaux 30 le long de la surface 40. Cette portion élargie confère un rigidité locale aux zones d'interface avec la surface 40. Dans l'exemple de la figure 2d, l'élément 50 est similaire à celui de l'exemple des figures 1 a et 1 b. Il comporte par ailleurs un repli d'extrémité 53 qui lui permet de s'emboîter contre le rebord du crochet de jante. Dans ces différents exemples, les positions relatives, le nombre, la forme, et autres caractéristiques des différents éléments de renfort circonférentiel peuvent varier. Aux différentes figures 2a à 2d, la vue présentée constitue une coupe sélectionnée à une position angulaire entre les bras radiaux 30 qui ne sont donc pas visibles sur ces figures.

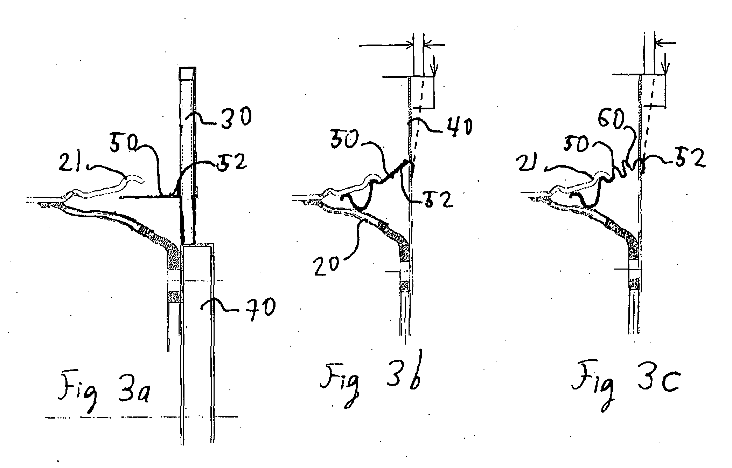

La coupe de la figure 3a est prise à une position angulaire qui permet de voir un des bras radiaux 30. Ceux-ci sont prévus dans la continuité de l'élément de fixation 70. Tel qu'illustré, les bras 30 coopèrent avec un élément de renfort circonférentiel intérieur 52.

L'exemple de la figure 3b permet de visualiser un autre type d'élément de renfort circonférentiel intérieur 52, coopérant à la fois avec le crochet de jante 21 et avec la portion interne de la roue 20.

Dans l'exemple de réalisation de la figure 3c, les fonctions de l'élément de renfort circonférentiel 50 et l'élément absorbeur d'énergie 60 ont été combinées dans un seul élément 52, fixé d'une part radialement intérieurement à la surface 40 et coopérant par ailleurs avec le crochet de jante 21.

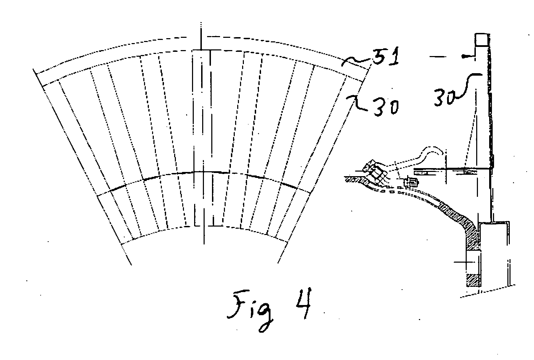

La figure 4 présente, en plus d'une vue transversale comme sur les autres figures, une vue de face d'un disque permettant de visualiser une portion des bras radiaux 30.

## Revendications

1. Disque d'interface (10) pour roue de véhicule (20), comportant :
a. au moins un élément de fixation (70), adapté pour permettre la fixation dudit disque (10) à une roue (20) ;
b. une pluralité de bras sensiblement radiaux (30) reliés aux éléments de fixation (70) et s'étendant radialement extérieurement depuis l'élément de fixation ;
c. une surface d'absorption d'énergie (40), coopérant avec lesdits bras (30) et destinée à fermer l'espace défini entre les bras radiaux ;
d. au moins un élément de renfort circonférentiel (50 ; 51,52), de forme sensiblement annulaire et coopérant avec l'ensemble des bras (30), et dont le module est sensiblement plus élevé que celui de la surface d'absorption d'énergie (40).

2. Disque d'interface selon la revendication 1, comportant un élément de renfort circonférentiel interne (52), coopérant avec lesdits bras (30) et disposé de façon à se trouver au voisinage du crochet de jante (21) lorsque le disque est en position montée sur une roue.

3. Disque d'interface selon l'une des revendications précédentes, comportant un élément de renfort circonférentiel externe (51), coopérant avec lesdits bras (30) et disposé de façon à se trouver dans la zone radialement externe dudit disque.

4. Disque d'interface selon l'une des revendications précédentes, dans lequel la surface d'absorption d'énergie (40) est constituée d'au moins un matériau adapté pour supporter un taux minimum de déformation sans subir de destruction.

5. Disque d'interface selon l'une des revendications précédentes, dans lequel l'élément de fixation (70) est adapté pour une fixation du disque au niveau des écrous de fixation de la roue.

6. Disque d'interface selon l'une des revendications précédentes, comportant par ailleurs une pluralité d'éléments absorbeurs d'énergie (60) répartis circonférentiellement de façon équidistante.

7. Disque d'interface selon la revendication 6, dans lequel les éléments absorbeurs d'énergie (60) sont réglables de façon à pouvoir ajuster leur rigidité.

8. Disque d'interface selon l'une des revendications précédentes, dans lequel la surface d'absorption d'énergie (40) est un écran.

## Claims

1. Interface disc (10) for a vehicle wheel (20), comprising:
a. at least one attachment element (70) designed to allow the said disc (10) to be attached to a wheel (20) ;
b. a plurality of substantially radial arms (30) connected to the attachment elements (70) and extending radially outwards from the attachment element;
c. an energy absorption surface (40) collaborating with the said arms (30) and configured to close the space defined between the radial arms;
d. at least one circumferential reinforcing element (50; 51, 52) of substantially annular shape collaborating with the set of arms (30) and the modulus of which is substantially higher than that of the energy absorption surface (40).

2. Interface disc according to claim 1, comprising an inner circumferential reinforcing element (52) collaborating with the said arms (30) and positioned in such a way as to lie in the vicinity of the rim flange (21) when the disc has been mounted on a wheel.

3. Interface disc according to one of the preceding claims, comprising an outer circumferential reinforcing element (51) collaborating with the said arms (30) and positioned in such a way as to lie in the region radially external to the said disc.

4. Interface disc according to one of the preceding claims, in which the energy absorption surface (40) is made of at least one material capable of withstanding a minimum degree of deformation without being destroyed.

5. Interface disc according to one of the preceding claims, in which the attachment element (70) is suitable for attaching the disc at the wheel nuts.

6. Interface disc according to one of the preceding claims, further comprising a plurality of energy absorbing elements (60) distributed equidistantly along the circumference.

7. Interface disc according to claim 6, in which the energy absorbing elements (60) are adjustable so that their rigidity can be altered.

8. Interface disc according to one of the preceding claims, in which the energy absorption surface (40) is a screen.

## Patentansprüche

1. Interfacescheibe (10) für ein Fahrzeugrad (20), die Folgendes umfasst:
a. mindestens ein Befestigungselement (70), das dazu ausgeführt ist, die Befestigung der Scheibe (10) an einem Rad (20) zu gestatten;
b. mehrere im Wesentlichen radiale Arme (30), die mit den Befestigungselementen (70) verbunden sind und sich von dem Befestigungselement radial nach außen erstrecken;
c. eine Energieaufnahmefläche (40), die mit den Armen (30) zusammenwirkt und die dazu bestimmt ist, den zwischen den radialen Armen definierten Raum zu schließen;
d. mindestens ein Umfangsverstärkungselement (50; 51, 52) mit im Wesentlichen ringförmiger Gestalt, das mit der Anordnung der Arme (30) zusammenwirkt und dessen Modul wesentlich höher ist als das der Energieaufnahmefläche (40).

2. Interfacescheibe nach Anspruch 1, die ein inneres Umfangsverstärkungselement (52) aufweist, das mit den Armen (30) zusammenwirkt und so angeordnet ist, dass es sich in der Nähe der Nutpartie (21) befindet, wenn die Scheibe an einem Rad angebracht worden ist.

3. Interfacescheibe nach einem der vorhergehenden Ansprüche, die ein äußeres Umfangsverstärkungselement (51) aufweist, das mit den Armen (30) zusammenwirkt und so angeordnet ist, dass es sich in dem radial außerhalb der Scheibe liegenden Bereich befindet.

4. Interfacescheibe nach einem der vorhergehenden Ansprüche, bei der die Energieaufnahmefläche (40) aus mindestens einem Material besteht, das geeignet ist, ein Mindestausmaß an Verformung zu widerstehen, ohne zerstört zu werden.

5. Interfacescheibe nach einem der vorhergehenden Ansprüche, bei der das Befestigungselement (70) für eine Befestigung der Scheibe an den Befestigungsmuttern des Rads ausgeführt ist.

6. Interfacescheibe nach einem der vorhergehenden Ansprüche, die des Weiteren mehrere Energieaufnahmeelemente (60) aufweist, die im gleichen Abstand über den Umfang verteilt sind.

7. Interfacescheibe nach Anspruch 6, bei der die Energieaufnahmeelemente (60) einstellbar sind, so dass ihre Steifigkeit verstellt werden kann.

8. Interfacescheibe nach einem der vorhergehenden Ansprüche, bei der die Energieaufnahmefläche (40) ein Schirm ist.
